# EUROPEAN PATENT APPLICATION

(11) **EP 4 270 914 A1**
(43) Date of publication of application: **01.11.2023**
(21) Application number: 23167661.0
(22) Date of filing: 13.04.2023
(51) Int. Cl.: H04N 1/32, G06F 3/12

(54) **IMAGE PROCESSOR, IMAGE PROCESSING PROGRAM, AND IMAGE PROCESSING SYSTEM**

(30) Priority: 28.04.2022 JP 2022074837
(71) Applicant: Konica Minolta, Inc., Tokyo 100-7015 (JP)
(72) Inventor: MATSUSHITA, Kouichirou, Tokyo 100-7015 (JP)
(74) Representative: MFG Patentanwälte Meyer-Wildhagen Meggle-Freund Gerhard PartG mbB

(57) **Abstract**

The same color as a previous printed matter is easily reproduced while confidential information of a customer is protected.

An image processor (40) includes an image feature information extractor (41) that extracts irreversible first image feature information from a read image of a printed matter, and an image feature information comparator (42) that selects second image feature information most similar to the first image feature information among a plurality of pieces of irreversible second image feature information extracted by the image feature information extractor (41) from read images of a plurality of printed matters printed previously, and acquires, as a comparison result, print setting information associated with the second image feature information.

## Description

### Background

### Technological Field

The present invention relates to an image processor, an image processing program, and an image processing system.

### Description of the Related art

In the printing industry, there is a case where a customer keeps, as a color sample, a part of printed matter delivered previously, and the customer requests for an output in the same color as the color sample at a time of reordering. On the other hand, from the viewpoint of customer information protection, it is required to discard print image data received previously and print setting information at a time of printing after a certain period of time (for example, after two or three days). Therefore, it is difficult to keep holding the print setting information of the previous printed matter. Thus, when the previous printed matter is reprinted, color matching processing with the color sample is required.

Therefore, there is disclosed a technique of performing color matching with a color sample by comparing an image obtained by scanning the color sample with document image data and generating a color conversion table (color profile) from which an image equivalent to the image obtained by scanning the color sample can be output (see JP 2016-048904 A).

However, in the technique disclosed in JP 2016-048904 A, at a time of reading the color sample by a scanner, at a time of generating a color conversion table (color profile) from which an image equivalent to an image obtained by scanning the color sample can be output, or the like, there is a problem that color matching cannot be performed with high accuracy because a color error occurs. In addition, the color of the output printed matter varies depending on a printing apparatus that has output the printed matter, unique settings of the printing apparatus, print settings in a print job, and the like. Therefore, even if a printing apparatus used at the time of printing of the previous printed matter or a printing apparatus of the same model as the printing apparatus is used, the same color as the previous printed matter cannot be easily reproduced because the previous print setting information is not held.

### Summary

The present invention has been made to solve the above problems, and an object of the present invention is to easily reproduce the same color as a previous printed matter while protecting confidential information of a customer.

To achieve the abovementioned object, according to an aspect of the present invention, an image processor reflecting one aspect of the present invention comprises: an image feature information extractor that extracts irreversible first image feature information from a read image of a printed matter; and an image feature information comparator that selects second image feature information most similar to the first image feature information among a plurality of pieces of irreversible second image feature information extracted by the image feature information extractor from read images of a plurality of printed matters printed previously, and acquires, as a comparison result, print setting information associated with the second image feature information.

### Brief Description of the Drawings

The advantages and features provided by one or more embodiments of the invention will become more fully understood from the detailed description given hereinbelow and the appended drawings which are given by way of illustration only, and thus are not intended as a definition of the limits of the present invention:
Fig. 1 is a diagram showing a configuration example of an image processing system according to an embodiment of the present invention;
Fig. 2 is a block diagram showing a functional configuration of an image processor according to an embodiment of the present invention;
Figs. 3A to 3C are diagrams showing histogram images of three-dimensional shapes of image feature information in an image processor according to an embodiment of the present invention;
Fig. 4 is a block diagram showing a hardware configuration of an image processor according to an embodiment of the present invention;
Fig. 5 is a diagram showing a data configuration example of image feature information extracted in an image processor according to an embodiment of the present invention;
Fig. 6 is a diagram showing a data configuration example of print setting information recorded in an image processor according to an embodiment of the present invention;
Fig. 7 is a flowchart of a procedure of recording processing of image feature information and print setting information in an image processing system according to an embodiment of the present invention; and
Fig. 8 is a flowchart of a procedure of color matching processing at a time of re-outputting of a printed matter in an image processing system according to an embodiment of the present invention.

### Detailed Description of Embodiments

Hereinafter, one or more embodiments of the present invention will be described with reference to the drawings. However, the scope of the invention is not limited to the disclosed embodiments. In the present specification and drawings, constituent elements having substantially the same function or configuration are denoted by the same reference numerals, and redundant description is omitted.

### <Configuration example of image processing system>

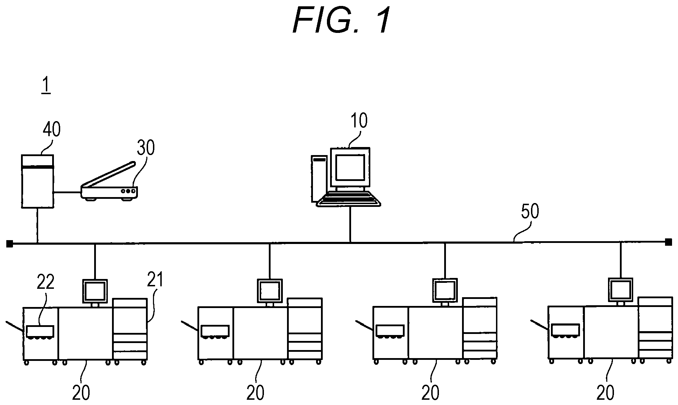

Fig. 1 is a diagram showing a configuration example of an image processing system according to the present embodiment. As shown in Fig. 1, an image processing system 1 includes a client terminal 10, a plurality of printers (image forming apparatuses) 20, a scanner 30, and an image processor 40. The client terminal 10, the plurality of printers 20, and the image processor 40 are connected via a communication line 50 so as to be able to transmit and receive information data to and from each other. The scanner 30 is connected to the image processor 40.

The client terminal 10 is an example of an information processor used by an operator, and transmits a print image to be ordered to the printers 20 via the communication line 50 in response to an operation of the operator.

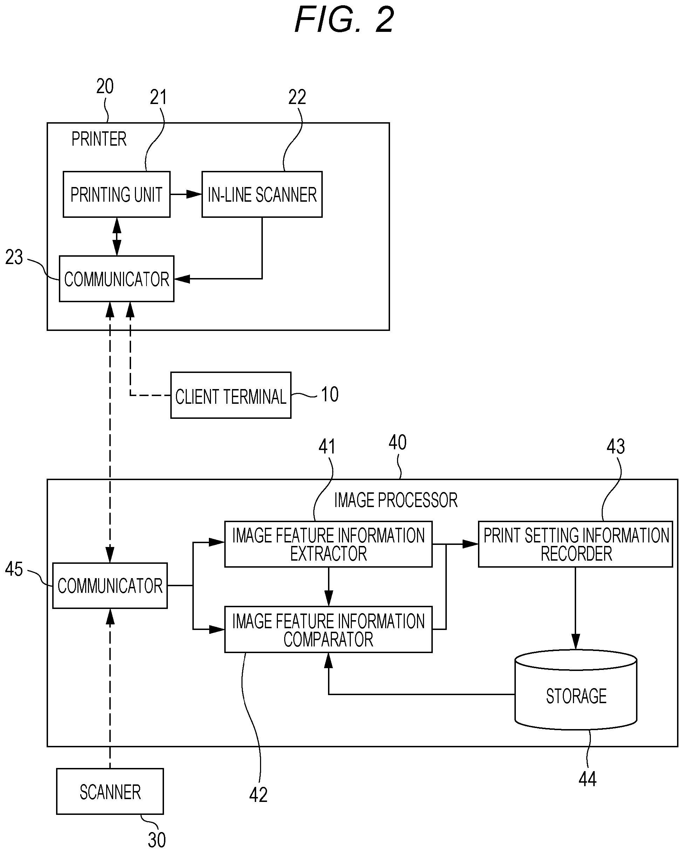

Each of the printers (image forming apparatuses) 20 includes, for example, a multi-function peripheral (MFP) equipped with a plurality of functions such as a scanner function, a copy function, a facsimile function, a network function, a BOX function, and a post-processing function. The printer 20 includes a printing unit 21 and an in-line scanner 22 shown in Fig. 1 and a communicator 23 shown in Fig. 2 to be described later, which are components according to the present embodiment. Note that illustration and description of other components of the printer 20 are omitted.

The printing unit 21 of the printer 20 is an example of an image forming apparatus that forms an image on a recording medium by an electrophotographic method, for example. The printing unit 21 includes constituent elements necessary for image formation, and prints a print image on a recording medium designated for a print job. Specifically, processing is performed in which an electrostatic latent image is formed by irradiating a photosensitive drum charged by a charging device with light corresponding to an image from an exposure device, charged toner is attached and developed by a developing device, the toner image is primarily transferred to a transfer belt, the toner image is secondarily transferred from the transfer belt to a recording medium, and the toner image on the recording medium is fixed by a fixing device.

The in-line scanner 22 of the printer 20 is an example of an image reader disposed inside the printer 20 and including an image sensor and the like. The in-line scanner 22 automatically scans printed matter conveyed from the printing unit 21, and transmits a read image of the scanned printed matter to the image processor 40 via the communication line 50.

The scanner 30 is an example of an image reader including an image sensor and the like, and the same model as the in-line scanner 22 of the printer 20 is adopted. For example, the scanner 30 scans a color sample of printed matter printed previously, and outputs a read image of the scanned color sample to the image processor 40.

The communicator 23 uses, for example, a network interface card (NIC) or the like, and can transmit and receive various information data between devices via a local area network (LAN), a dedicated line, or the like connected to a terminal of the NIC. The communicator 23 transmits and receives various information data to and from the client terminal 10 and the image processor 40.

The image processor 40 is an example of an information processor, and as shown in Fig. 2, includes an image feature information extractor 41, an image feature information comparator 42, a print setting information recorder 43, a storage 44, and a communicator 45. The communicator 45, the image feature information extractor 41, and the print setting information recorder 43 are connected in this order. The communicator 45, the image feature information comparator 42, and the print setting information recorder 43 are connected in this order. The image feature information extractor 41 is connected to the image feature information comparator 42 so as to be able to output image feature information. The print setting information recorder 43 is connected to the storage 44 so that information data (for example, print setting information) can be written, and the image feature information comparator 42 is connected to the storage 44 so that information data (for example, the image feature information) can be read. The communicator 45 is connected to the external printer 20, and receives the read image of the printed matter read by the in-line scanner 22 of the printer 20 from the communicator 23 of the printer 20. Furthermore, the communicator 45 is connected to the scanner 30, and inputs the read image of the color sample (previous printed matter) read by the scanner 30 from the scanner 30.

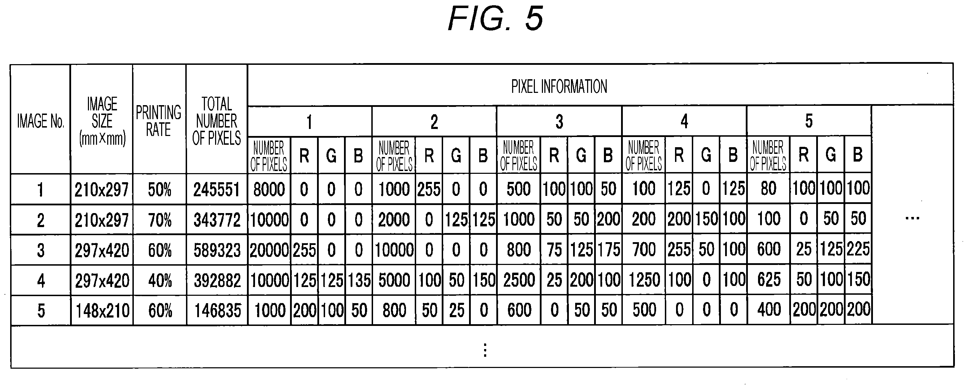

The image feature information extractor 41 performs extraction processing of irreversible image feature information (first image feature information) in which drawing content of the image cannot be visually recognized from the read image of the printed matter input by the communicator 45. In the extraction processing of the image feature information, the image feature information extractor 41 extracts image feature information of the read image of the printed matter scanned by the in-line scanner 22 of the printer 20 (hereinafter abbreviated as image feature information of the printed matter) and image feature information of the read image of the color sample scanned by the scanner 30 (hereinafter abbreviated as image feature information of a color sample). Furthermore, the image feature information extractor 41 outputs the extracted image feature information of the printed matter and print setting information at a time of printing the printed matter (hereinafter abbreviated as print setting information of the printed matter) to the print setting information recorder 43. The data of the image feature information will be described later in detail with reference to Fig. 5.

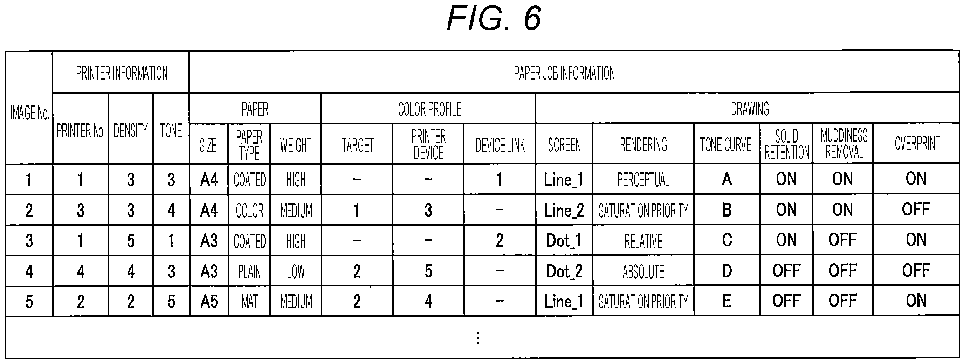

The image feature information comparator 42 performs comparison processing of the image feature information of the printed matter and each recorded image feature information in the storage 44. In the comparison processing of the image feature information, the image feature information comparator 42 selects recorded image feature information (second image feature information) most similar to the image feature information (first image feature information) extracted by the image feature information extractor 41 from the read image of the printed matter to be the color sample among the plurality of pieces of image feature information (second image feature information) extracted by the image feature information extractor 41 from the read images of the plurality of printed matters printed previously and stored in the storage 44, and acquires print setting information associated with the selected recorded image feature information (second image feature information) as a comparison result. Furthermore, the image feature information comparator 42 transmits print setting information that is a comparison result to the printer 20 having a number of "printer No" (described later) (see Fig. 6 to be described later) of the print setting information.

Specifically, in the comparison processing of the image feature information, the image feature information comparator 42 compares the image feature information of the color sample with each of "image size", "printing rate", and "total number of pixels" (described later) (see Fig. 5 to be described later) of each recorded image feature information, and selects recorded image feature information having a similarity exceeding a first threshold value. Note that the first threshold value is appropriately set for the similarity between the "image size", the "printing rate", and the "total number of pixels".

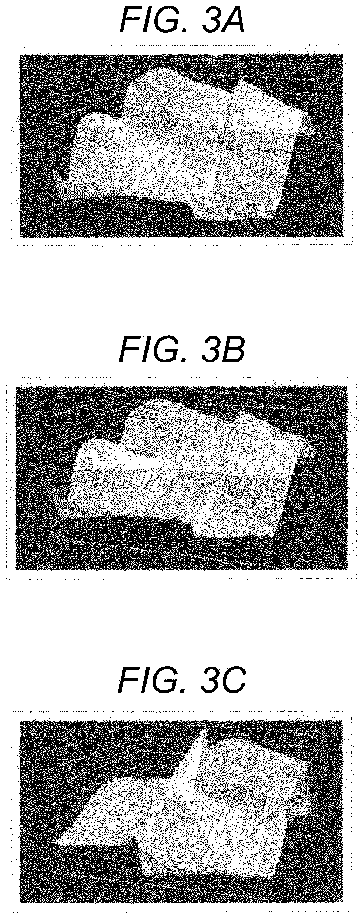

Then, the image feature information comparator 42 generates a three-dimensional shape by converting, into a histogram, pixel information (described later) (each RGB value in Fig. 5 to be described later) of the image feature information of the color sample and the selected recorded image feature information. Figs. 3A to 3C are diagrams showing histogram images of three-dimensional shapes of image feature information in the image processor 40 according to the present embodiment. Fig. 3A is a diagram showing a histogram image of a three-dimensional shape of image feature information of a color sample. Fig. 3B is a diagram showing Example 1 of a histogram image of a three-dimensional shape of recorded image feature information. Fig. 3C is a diagram showing Example 2 of the histogram image of the three-dimensional shape of the recorded image feature information.

The image feature information comparator 42 compares the three-dimensional shape (Fig. 3A) of the image feature information of the color sample with each of the three-dimensional shapes (for example, Figs. 3B and 3C) of the selected recorded image feature information, and further selects recorded image feature information having a similarity exceeding a second threshold value (predetermined threshold value). The image feature information comparator 42 acquires, as a comparison result, print setting information associated with recorded image feature information (for example, Fig. 3B) having the highest similarity to, that is, having the smallest difference from, the image feature information of the color sample among the finally selected recorded image feature information, and transmits the print setting information to the printer 20 having a number of "printer No" (described later) (see Fig. 6 to be described later) of the print setting information. Note that the second threshold value (predetermined threshold value) is appropriately set for the similarity of the histogram images of the three-dimensional shapes of the image feature information. The level of the similarity is represented in a pseudo manner by a three-dimensional shape. For example, it can be said that the images of Figs. 3A and 3B having similar three-dimensional shapes have high similarity, and the images of Figs. 3A and 3C having non-similar three-dimensional shapes have low similarity.

Meanwhile, the printer 20 that has received the print setting information that is the comparison result of the image feature information from the image feature information comparator 42 reprints an original image of an automatic color sample with the received print setting information. Then, the in-line scanner 22 of the printer 20 automatically scans the reprinted printed matter and transmits a read image of the reprinted printed matter to the image processor 40.

In the image processor 40, the image feature information comparator 42 extracts the image feature information of the re-output printed matter, compares the image feature information (first image feature information) of the re-output printed matter with the recorded image feature information (second image feature information) associated with the print setting information that is the comparison result, and calculates the similarity. When the calculated similarity exceeds the second threshold value (predetermined threshold value), color matching between the re-output printed matter and the color sample ends. On the other hand, when the calculated similarity is less than the second threshold value (predetermined threshold value), the image feature information comparator 42 transmits information indicating that the print setting information needs to be corrected to the printer 20. Next, the printer 20 automatically corrects the print setting information so that the image feature information of the printed matter to be re-output matches the recorded image feature information associated with the print setting information that is the comparison result. Next, when the printer 20 automatically corrects the print setting information, the corrected print setting information is transmitted to the image feature information comparator 42. Then, the image feature information comparator 42 outputs the corrected print setting information to the print setting information recorder 43.

The print setting information recorder 43 outputs and records, in the storage 44, the image feature information of the printed matter input from the image feature information comparator 42 and the print setting information of the printed matter in association with each other. When the corrected print setting information is input from the image feature information comparator 42, the print setting information recorder 43 overwrites and records the corrected print setting information on the uncorrected print setting information.

The storage 44 stores the image feature information (see Fig. 5 to be described later) and the print setting information (see Fig. 6 to be described later) input from the print setting information recorder 43.

The communicator 45 transmits and receives information data to and from each of the external printer 20 and the scanner 30. For example, the communicator 45 receives the read image of the printed matter from the printer 20 and receives the read image of the color sample from the scanner 30. In addition, the communicator 45 transmits the comparison result (print setting information) of the comparison processing of the image feature information in the image feature information comparator 42 to the printer 20. Furthermore, the communicator 45 receives the automatically corrected print setting information from the printer 20.

### <Hardware configuration of image processor>

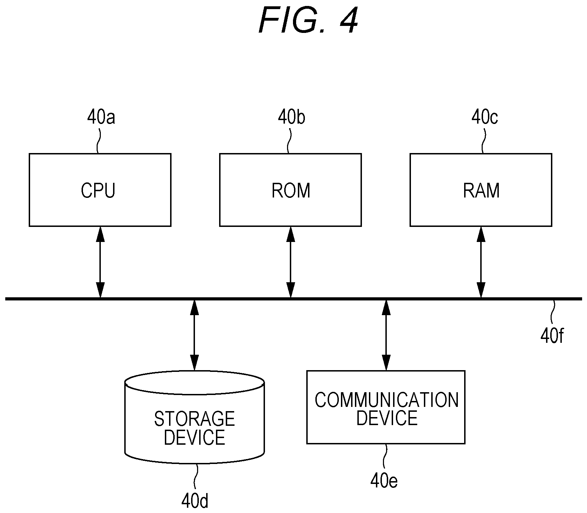

Next, a hardware configuration of the image processor 40 will be described. Fig. 4 is a block diagram showing the hardware configuration of the image processor 40 according to the present embodiment. The image processor 40 has a central processing unit (CPU) 40a, a read only memory (ROM) 40b, a random access memory (RAM) 40c, a storage device 40d, and a communication device 40e, and includes a calculation processor such as a microprocessor. The CPU 40a, the ROM 40b, the RAM 40c, the storage device 40d, and the communication device 40e are connected to each other via a bus 40f.

In the image processor 40, the CPU 40a reads a program code of software for implementing each function from the ROM 40b and executes the program code. The CPU 40a controls, for example, extraction processing of image feature information in the image feature information extractor 41 shown in Fig. 2, comparison processing of image feature information in the image feature information comparator 42, processing of recording image feature information and print setting information in the print setting information recorder 43, and the like.

The ROM 40b includes, for example, a storage medium such as a nonvolatile memory, and stores programs, data, and the like executed and referred to by the CPU 40a.

The RAM 40c includes, for example, a storage medium such as a volatile memory, and temporarily stores information data necessary for each processing performed by the CPU 40a.

The storage device 40d is constituted by a non-transitory computer readable recording medium storing a program to be executed by the CPU 40a, and is constituted by a storage device such as a hard disk drive (HDD). The storage device 40d stores a program for the CPU 40a to control each unit, a program for an operating system (OS), a controller, and the like, and data. The storage device 40d stores the image feature information and the print setting information stored in the storage 44 shown in Fig. 2. Note that a part of the programs and data stored in the storage device 40d may be stored in the ROM 40b. The computer-readable non-transitory recording medium storing the program executed by the CPU 40a is not limited to an HDD, and may be a recording medium such as a solid state drive (SSD), a compact disc (CD)-ROM, or a digital versatile disc (DVD)-ROM.

The communication device 40e uses, for example, a network interface card (NIC) or the like, and can transmit and receive various information data between devices via a local area network (LAN), a dedicated line, or the like connected to a terminal of the NIC. The communication device 40e transmits and receives various information data in the communicator 45 shown in Fig. 2.

### <Data configuration example of image feature information>

Fig. 5 is a diagram showing a data configuration example of image feature information extracted in the image processor 40 according to the present embodiment. As shown in Fig. 5, the image feature information includes fields of "image No", "image size", "printing rate", "total number of pixels", and "pixel information".

The data of "image No" is identification information (for example, "1", "2",... "N", and the like) of a read image attached to each read image of the printed matter.

The data of the "image size" is information data indicating the size of the read image of the printed matter (for example, length × width). In Fig. 4, for example, data of "image size" such as "210 × 297", "297 × 420", and "148 × 210" is exemplified. Note that the unit of length and width is mm.

The data of the "printing rate" is a ratio (for example, "50%", "70%", "60%", and the like) of the integrated area of the printing area (characters, figures, images, and the like) to the area of the recording medium.

The data of the "total number of pixels" is the total number of pixels of the print image on the recording medium. The "total number of pixels" is the sum of the "number of pixels" (described later) included in the "pixel information".

The data of "pixel information" is irreversible information data that is extracted on the basis of the image data of the read image and in which the drawing content of the image cannot be visually recognized. The field of "pixel information" includes a plurality of pieces of pixel information, and each piece of pixel information is numbered (for example, "1", "2",... "N", and the like). As shown in Fig. 5, data of each pixel information is an information set of "number of pixels", "R", "G", and "B". "R", "G", and "B" are three 8-bit unsigned integers (for example, "0", "125", "255", and the like) indicating luminance of red, green, and blue, respectively. The "number of pixels" is the number of pixels having a predetermined RGB value (that is, a predetermined combination of "R", "G", and "B") in the read image. For example, the RGB value of the "1"-st "pixel information" in the read image with the "image No" of " 1" is "0, 0, 0", and the number of pixels having this RGB value, that is, the "number of pixels" is "8000". The "pixel information" includes all the RGB values in the read image and the number of pixels having the RGB values.

### <Data configuration example of print setting information>

Fig. 6 is a diagram showing a data configuration example of print setting information recorded in the image processor 40 according to the present embodiment. As shown in Fig. 6, the print setting information includes fields of "image No", "printer information", and "print job information".

The data of "image No" is the same as "image No" shown in Fig. 5, and is identification information of a read image. The print setting information is associated with the image feature information shown in Fig. 5 by "image No".

As shown in Fig. 5, the field of "printer information" includes information of "printer No", "density", and "tone". The data of the "printer No" is identification information (for example, "1", "2",... "N", and the like) of a printer that has printed the image associated with the "image No". The data of "density" and "tone" is setting information related to image formation of the printer 20, and is setting information of "density" (for example, a set value of a density level such as "2", "3", or "5") when an image is printed by the printer corresponding to the "printer No" and setting information of "tone" (for example, a set value of a tone level such as "1", "3", or "4"). Note that, in the present embodiment, "1" to "5" are assumed as the level ranges of "density" and "tone".

The field of "print job information" stores print job information in the printer 20 that has output the printed matter. As shown in Fig. 6, the print job information includes fields of "paper", "color profile", and "drawing".

The field of "paper" includes information such as "size" (for example, "A4", "A3", and the like), "paper type" (for example, "coated", "color", "plain", and the like), and "weight" (for example, "high", "medium", "low", and the like), which are setting information of printing paper (recording medium).

The field of "color profile" includes information such as "target", "printer device", and "device link", which are setting information of a color profile. The data of "target" is information indicating setting of a target profile. For example, "-" represents that the target profile is not set, and "1", "2", and the like represent the number of the set target profile. The data of the "printer device" is information indicating setting of a printer profile. For example, "-" represents that the printer profile is not set, and "3", "5", and the like represent the number of the set printer profile. The data of the "device link" is information indicating setting of a device link profile. For example, "-" represents that the device link profile is not set, and "3", "5", and the like represent the number of the set device link profile.

The field of "drawing" includes information such as "screen", "rendering", "tone curve", "solid retention", "muddiness removal", and "overprint", which are setting information related to drawing.

The data of the "screen" is setting information of a drawing shape per pixel of an image (for example, identification information of the drawing shape such as "Line_1", "Line_2", "Dot_1", and "Dot_2").

The data of "rendering" is setting information of image drawing processing (for example, "perceptual", "saturation priority", "relative", "absolute", and the like). "Perceptual" represents processing of drawing an image having a wide color gamut (high saturation) with emphasis on tone reproduction and balance of the entire image. "Saturation priority" is often used in tables and graphs in presentations and represents processing of drawing in a color with high chroma. "Relative" represents processing of drawing so as to match a white reference of input and output. "Absolute" represents processing of drawing so as not to match a white reference of input and output.

The data of the "tone curve" is setting information of brightness of the image (for example, a setting value of a level of brightness of an image, such as "A" to "E").

The data of "solid retention" is setting information as to whether to maintain the solid of four colors of yellow (Y), magenta (M), cyan (C), and black (K) at 100%. For example, "ON" represents maintaining at 100%, and "OFF" represents not maintaining at 100%.

The data of "muddiness removal" is information on whether to set the muddiness removal. For example, "ON" represents setting the muddiness removal, and "OFF" represents not setting the muddiness removal.

The data of "overprint" is setting information as to whether to print a color on a certain color in an overlapping manner. For example, "ON" represents that colors are printed in an overlapping manner, and "OFF" represents that colors are not printed in an overlapping manner.

Note that the configuration of the print setting information is not limited to the configuration shown in Fig. 6, and various information included in the print setting information can be appropriately changed as necessary.

### <Procedure of recording processing of image feature information and print setting information>

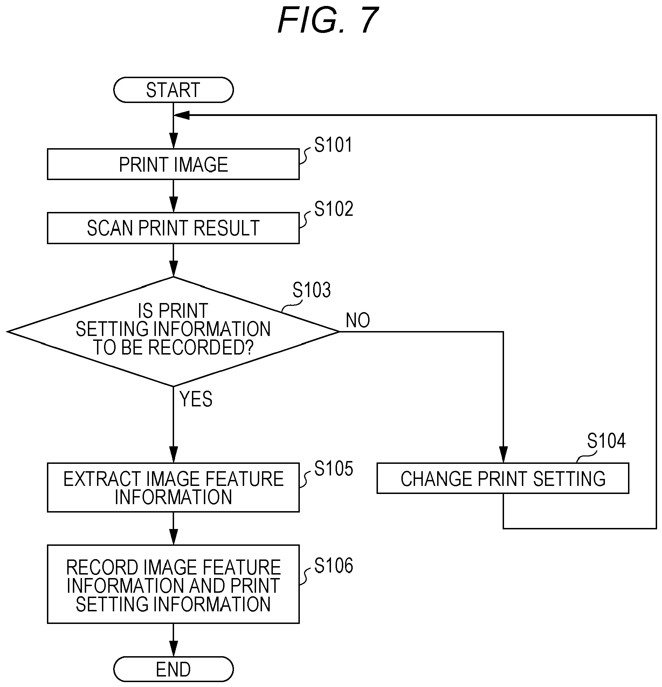

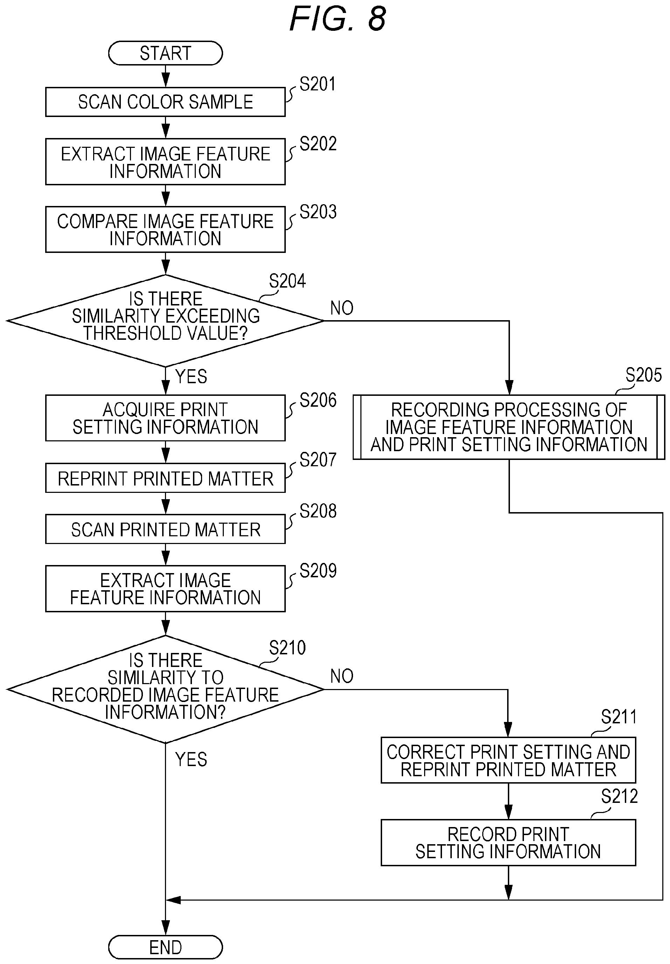

Next, recording processing of the image feature information and the print setting information in the image processing system 1 will be described. Fig. 7 is a flowchart of a procedure of the recording processing of the image feature information and the print setting information in the image processing system 1 according to the present embodiment. The processing described below is started when the printer 20 receives a print job from the client terminal 10. In addition, the processing described below is called and started in step S205 in a case where the determination result of the processing of step S204 of Fig. 8 described later is No.

First, the printing unit 21 of the printer 20 prints an image on the basis of the received print job (step S101). Furthermore, in this processing, the printing unit 21 outputs the recording medium (print result) on which the image is printed to the in-line scanner 22.

Next, the in-line scanner 22 of the printer 20 scans the print result input from the printing unit 21 (step S102). In this processing, the printer 20 transmits the read image of the scanned print result and the print setting information at the time of printing to the image processor 40.

Next, the image processor 40 determines whether to record the print setting information received from the printer 20 (step S103). In this processing, in a case where a customer confirms and is satisfied with the print result, it is determined that the image processor 40 records the print setting information (the determination result of step S103 is Yes). On the other hand, in a case where the customer confirms and is not satisfied with the print result, it is determined that the image processor 40 does not record the print setting information (the determination result of step S103 is No). Note that information indicating whether the customer is satisfied with the print result is input from an operation display of the printer 20 by the operator, for example, and transmitted to the image processor 40 via the printer 20.

When the image processor 40 determines not to record the print setting information in the processing of step S103 (the determination result is No), print setting is changed in the printer 20 so that the print result satisfying the customer can be output (step S104). After the processing of step S104, the processing returns to step S101, and the processing of steps S101 to S103 is repeatedly executed.

On the other hand, when it is determined in the processing of step S103 that the image processor 40 records the print setting information (the determination result is YES), the image feature information comparator 42 of the image processor 40 extracts the image feature information from the read image of the print result. Then, the image feature information comparator 42 outputs the image feature information of the extracted print result and the print setting information of the print result to the print setting information recorder 43 (step S105).

Next, the print setting information recorder 43 of the image processor 40 records, in the storage 44, the image feature information (see Fig. 5) of the print result and the print setting information (see Fig. 6) of the print result in association with each other (step S106).

After the processing of step S 106, the recording processing of the image feature information and the print setting information ends.

### <Procedure of color matching processing at time of re-outputting of printed matter>

Next, color matching processing at a time of re-outputting of the printed matter in the image processing system 1 will be described. Fig. 8 is a flowchart of a procedure of color matching processing at the time of re-outputting of the printed matter in the image processing system 1 according to the present embodiment. The processing described below starts when the operator scans a color sample by using the scanner 30.

First, the scanner 30 scans a color sample input by the operator and outputs a read image of the scanned color sample to the image processor 40 (step S201).

Next, the image feature information extractor 41 of the image processor 40 extracts the image feature information of the color sample from the read image of the color sample input from the scanner 30 (step S202), and outputs the image feature information of the color sample to the image feature information comparator 42.

Next, the image feature information comparator 42 of the image processor 40 performs comparison processing of the image feature information of the color sample and each recorded image feature information in the storage 44 (step S203). In this processing, the image feature information comparator 42 compares the image feature information of the color sample with each recorded image feature information and calculates similarity.

Next, the image feature information comparator 42 of the image processor 40 determines whether there is a similarity exceeding a predetermined threshold value among the calculated similarities (step S204). In this processing, the image feature information comparator 42 compares the image feature information of the color sample with each of "image size", "printing rate", and "total number of pixels" (see Fig. 5) of each recorded image feature information, and selects recorded image feature information having a similarity less than a first threshold value. Then, the image feature information comparator 42 compares the three-dimensional shape (Fig. 3A) of the image feature information of the color sample with each of the three-dimensional shapes (for example, Figs. 3B and 3C) of each selected recorded image feature information described above, and further selects recorded image feature information having a similarity higher than or equal to a second threshold value (predetermined threshold value).

In the processing of step S204, when the image feature information comparator 42 determines that there is no similarity exceeding the predetermined threshold value (the determination result is No), the processing of step S205, that is, the recording processing of the image feature information and the print setting information shown in Fig. 7 is called and executed.

On the other hand, in the processing of step S204, when the image feature information comparator 42 determines that there is a similarity exceeding the predetermined threshold value (the determination result is Yes), the image feature information comparator 42 acquires, from the storage 44, the print setting information associated with the recorded image feature information having the highest similarity to, that is, the smallest difference from, the image feature information of the color sample, among the selected recorded image feature information, as the comparison result (step S206). In this processing, the image feature information comparator 42 outputs the acquired print setting information to the printer 20.

Next, the printing unit 21 of the printer 20 re-outputs the printed matter with the print setting information received from the image feature information comparator 42 (step S207).

Subsequently, the in-line scanner 22 of the printer 20 automatically scans the re-output printed matter (step S208). In this processing, the printer 20 transmits the read image of the scanned printed matter to the image feature information comparator 42 of the image processor 40.

Next, the image feature information comparator 42 of the image processor 40 extracts image feature information from the read image of the reprinted printed matter (step S209). In this processing, the image feature information comparator 42 calculates the similarity between the image feature information of the reprinted printed matter and the recorded image feature information associated with the print setting information at a time of reprinting (print setting information that is a comparison result).

Next, the image feature information comparator 42 of the image processor 40 determines whether the image feature information of the reprinted printed matter is similar to the recorded image feature information (step S210). In this processing, when the similarity between the image feature information of the reprinted printed matter and the recorded image feature information exceeds the second threshold value (predetermined threshold value), the image feature information comparator 42 determines that the image feature information of the reprinted printed matter is similar to the recorded image feature information (the determination result is Yes). On the other hand, when the similarity between the image feature information of the reprinted printed matter and the recorded image feature information is less than the second threshold value (predetermined threshold value), the image feature information comparator 42 determines that the image feature information of the reprinted printed matter is not similar to the recorded image feature information (the determination result is No).

When the image feature information comparator 42 determines that the image feature information of the reprinted printed matter is not similar to the recorded image feature information in the processing of step S210 (No), the printer 20 automatically corrects the print setting information so that the image feature information of the print image to be reprinted matches the recorded image feature information, and re-outputs the printed matter (step S211). In this processing, the printer 20 transmits the corrected print setting information to the image feature information comparator 42 of the image processor 40.

Next, the image feature information comparator 42 of the image processor 40 outputs the corrected print setting information received from the printer 20 to the print setting information recorder 43, and the print setting information recorder 43 overwrites and records the corrected print setting information in the uncorrected print setting information associated with the recorded image feature information in the storage 44 (step S212).

On the other hand, in the processing of step S210, when the image feature information comparator 42 determines that the image feature information of the reprinted printed matter is similar to the recorded image feature information (the determination result is No), or after the processing of step S212, the color matching processing at the time of re-outputting of the printed matter ends.

### [Effects]

As described above, the image processing system 1 according to an embodiment of the present invention extracts irreversible image feature information in which the drawing content of the image cannot be visually recognized from the read image of the color sample, and records the image feature information and the print setting information at the time of printing of the printed matter in association with each other. Therefore, the printer 20 can use the previous print setting information at the time of reprinting, and can easily reproduce the same color as the printed matter previously output while protecting confidential information of the customer. Furthermore, in the image processing system 1, the printer 20 automatically corrects the print setting information so that the image feature information of the print image to be reprinted matches the recorded image feature information, and re-outputs the printed matter. Therefore, the same color as the printed matter output previously can be reproduced with high accuracy.

### <Modification>

Although various processing in the image processor, the image processing system, and the image processing system according to an embodiment of the present invention have been described and illustrated in detail, the disclosed embodiments are made for purposes of illustration and example only and not limitation. The scope of the present invention should be interpreted by terms of the appended claims, and various other modifications can be made without departing from the gist of the present invention described in the claims.

In the image processing system 1 according to the above embodiment, the image processor 40 is an independent component, but the present invention is not limited thereto. For example, the image processor 40 may be an internal configuration of the printer 20. In this case, each printer 20 includes each component of the image processor 40 shown in Fig. 2.

## Claims

1. An image processor (40) comprising:
an image feature information extractor (41) that extracts irreversible first image feature information from a read image of a printed matter; and
an image feature information comparator (42) that selects second image feature information most similar to the first image feature information among a plurality of pieces of irreversible second image feature information extracted by the image feature information extractor (41) from read images of a plurality of printed matters printed previously, and acquires, as a comparison result, print setting information associated with the second image feature information.

2. The image processor (40) according to claim 1, wherein the image feature information comparator (42) outputs the print setting information acquired as the comparison result to a printer (20) that prints the printed matter.

3. The image processor (40) according to claim 1, further comprising a print setting information recorder (43) that records the first image feature information and the print setting information at a time of printing of the printed matter in association with each other.

4. The image processor (40) according to any one of claims 1 to 3, wherein the image feature information comparator (42) selects the second image feature information having a highest similarity to the first image feature information among the plurality of pieces of second image feature information.

5. The image processor (40) according to any one of claims 1 to 3, wherein the first image feature information and the second image feature information include pixel information of the read image of the printed matter.

6. The image processor (40) according to any one of claims 1 to 3, wherein the print setting information includes identification information of the printer (20) that has output the printed matter, setting information related to image formation of the printer (20), and print job information in the printer (20) that has output the printed matter.

7. The image processor (40) according to claim 6, wherein the setting information related to the image formation of the printer (20) includes setting information of density and tone of an image.

8. The image processor (40) according to claim 6, wherein the print job information includes setting information of a recording medium, setting information of a color profile, and setting information related to drawing.

9. An image processing program causing an image processor (40) to implement and execute processing of:
extracting irreversible first image feature information from a read image of a printed matter; and
selecting second image feature information most similar to the first image feature information among a plurality of pieces of second image feature information extracted from read images of a plurality of printed matters printed previously, and acquires, as a comparison result, print setting information associated with the second image feature information.

10. An image processing system (1) comprising:
a printer (20) that forms an image on a recording medium and outputs a printed matter; and
an image processor (40), wherein
the image processor (40) includes
an image feature information extractor (41) that extracts irreversible first image feature information from a read image of a printed matter, and
an image feature information comparator (42) that selects second image feature information most similar to the first image feature information among a plurality of pieces of second image feature information extracted by the image feature information extractor (41) from read images of a plurality of printed matters printed previously, and acquires, as a comparison result, print setting information associated with the second image feature information.

11. The image processing system (1) according to claim 10, wherein the printer (20) re-outputs the printed matter with the print setting information that is the comparison result acquired by the image feature information comparator (42),
the image feature information comparator (42) extracts the image feature information of the printed matter having been re-output, compares the image feature information of the printed matter having been re-output with the image feature information having been recorded and associated with the print setting information that is the comparison result, and calculates a similarity, and
when the similarity is less than a predetermined threshold value, the printer (20) automatically corrects the print setting information so that the image feature information of the printed matter to be re-output matches the image feature information having been recorded and associated with the print setting information that is the comparison result.
